# EUROPEAN PATENT APPLICATION

(11) **EP 4 375 234 A1**
(43) Date of publication of application: **29.05.2024**
(21) Application number: 22209828.7
(22) Date of filing: 28.11.2022
(51) Int. Cl.: C01B 3/36, C01B 3/48, C01B 3/50, C01B 3/52

(54) **PROCESS AND PLANT FOR PRODUCING A SYNTHESIS GAS STREAM FROM A CARBON-CONTAINING FEED STREAM**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: WALTER, Stefan, 60439 Frankfurt am Main (DE); WEIGAND, Peter, 60439 Frankfurt am Main (DE); COVELLA, Karsten, 60388 Frankfurt am Main (DE)
(74) Representative: Air Liquide

(57) **Abstract**

Provided is a process for producing a synthesis gas product stream by partial oxidation of fluid or fluidizable carbon-containing feed stream with an oxygen-containing oxidant in a partial oxidation reactor (106) by at least partially reacting the feed stream in a reaction chamber (108) to afford a hot crude synthesis gas stream, quenching the hot crude synthesis gas stream in a quench chamber (112) arranged downstream of an outlet of the reaction chamber (108) to form a quenched crude synthesis gas stream, discharging a purified synthesis gas stream from at least one conditioning stage and/or purification stage (118), cooling the purified synthesis gas stream with a first coolant stream and introducing into a gas-liquid phase separation apparatus (126) to discharge a synthesis gas product stream and an ammonia-containing liquid condensate stream and at least partially recycling the ammonia-containing liquid condensate stream to the quench chamber (112).

## Description

### TECHNICAL FIELD

The present invention relates generally to synthesis gas production; more specifically, the present invention relates to a process and a plant for producing a synthesis gas stream containing hydrogen and carbon oxides by partial oxidation of a fluid or fluidizable carbon-containing feed stream with an arrangement to recover and make use of formed ammonia during the synthesis gas production for lowering the potential corrosion rate in quench chamber of the plant (i.e. a synthesis gas production plant).

### BACKGROUND

In a gasifier, the carbon-containing feedstock is converted with an oxygen-containing gas to raw synthesis gas consisting mainly of hydrogen and carbon monoxide at high temperatures. The raw synthesis gas is often quickly cooled down by direct contact with water in a quench which is installed in a quench chamber. Part of the water is vaporized thus cooling the raw synthesis gas. The surplus water acts as a washing agent and removes particles and soot which is formed as a byproduct in the partial oxidation process. Another trace component is ammonia which is formed in the hot gasifier from the nitrogen contained in the feedstock as well as in the oxygen-containing gas.

The water phase separated in the quench chamber from the cooled raw gas at the elevated pressure of the process typically has a temperature of 200 °C or higher. The raw synthesis gas contains carbon monoxide which partly dissolves into the water phase. The dissolved carbon monoxide is partly converted into the formation of formic acid. The formation of formic acid is dependent on temperature and the CO concentration in the gas phase. The presence of formic acid lowers the pH value and prevents the formation of protective layers on carbon steel. This causes high corrosion rates on carbon steel or the necessity to use higher-grade material, which is more costly.

The decrease in pH value in the quench water may be mitigated by the formation of caustic compounds like ammonia. Due to the high temperature in the quench chamber, the major part of the ammonia stays in the raw synthesis gas and is thus not acting on the pH value. In addition, the high temperature in the downstream scrubber leads to low ammonia concentration in the water removed from the bottom of the scrubber which serves as the water source for the quench chamber. Patent US 4854942 describes recovering of ammonia from the vapor phase which is formed during soot slurry expansion and injection into the scrubber. At temperatures above 180 °C at the top of the scrubber, the problem is that the solubility of ammonia in the water is low (i.e. vapor pressure of NH₃ is high) and the most of the ammonia is lost with the gas leaving the scrubber. The water stream which is sent from the bottom of the scrubber is very low in ammonia concentration.

Therefore, there is a need to address the aforementioned technical drawbacks in existing known technologies to lower the potential corrosion rate in a quench chamber by using formed ammonia during the synthesis gas production.

### SUMMARY

The present invention seeks to provide an improved approach to lower the potential corrosion rate in a quench chamber of a synthesis gas production plant by recovering and making use of formed ammonia during the synthesis gas production. An aim of the present invention is to provide a solution that overcomes, at least partially, the problems encountered in the prior art and provide a process and a plant for producing a synthesis gas product stream containing hydrogen and carbon oxides from a fluid or fluidizable carbon-containing feed stream with an arrangement to mitigate the corrosion in the quench chamber of the plant (i.e. the synthesis gas production plant). The process includes at least partially recycling formed ammonia present in a cold process condensate recovered downstream of a scrubbing stage in a gas cooling section to the quench chamber, thus the ammonia concentration in a raw synthesis gas received from a reaction chamber of a partial oxidation reactor is increased resulting in a higher ammonia concentration in carbon-containing warm aqueous quenching agent stream and soot slurry discharged after the production of quenched crude synthesis gas stream from the partial oxidation reactor, which leads to a higher pH value in downstream systems, e.g. process condensate or soot slurry treatment. Further, the wastewater from the plant is significantly reduced by the usage of the process condensate as is the requirement for fresh make-up water.

The object of the present invention is achieved by the solutions provided in the enclosed independent claims. Advantageous implementations of the present invention are further defined in the enclosed dependent claims.

According to a first aspect, the present invention provides a process for producing a synthesis gas product stream containing hydrogen and carbon oxides by partial oxidation of a fluid or fluidizable carbon-containing feed stream with an oxygen-containing oxidant in a partial oxidation reactor, comprising the following steps:
(a) providing the feed stream in fluid or fluidized form, providing an oxidant stream, optionally providing a moderator stream comprising steam and/or carbon dioxide;
(b) providing a partial oxidation reactor comprising a reaction chamber having at least one inlet and an outlet, at least one burner arranged at the at least one inlet of the reaction chamber and a quench chamber arranged downstream of the outlet of the reaction chamber and in fluid connection therewith;
(c) introducing the feed stream, the oxidant stream and the optional moderator stream into the reaction chamber via the at least one burner;
(d) at least partially reacting the feed stream with the oxidant stream under partial oxidation conditions in the burner and/or in the reaction chamber arranged downstream of the burner to afford a hot crude synthesis gas stream;
(e) discharging the hot crude synthesis gas stream from the reaction chamber and introducing the hot crude synthesis gas stream into the quench chamber, abruptly cooling (quenching) the hot crude synthesis gas stream in the quench chamber by means of contacting and direct heat exchange of the hot crude synthesis gas stream with a cold aqueous quenching agent stream to form a quenched crude synthesis gas stream and a carbon-containing warm aqueous quenching agent stream;
(f) discharging the quenched crude synthesis gas stream from the quench chamber and introducing the quenched crude synthesis gas stream into at least one conditioning stage and/or purification stage, discharging a purified synthesis gas stream from the at least one conditioning stage and/or purification stage;
(g) introducing the purified synthesis gas stream into at least one first cooling apparatus, cooling the purified synthesis gas stream in the at least one first cooling apparatus in indirect heat exchange with a first coolant stream, discharging a cooled purified synthesis gas stream from the at least one cooling apparatus;
(h) introducing the cooled purified synthesis gas stream into a gas-liquid phase separation apparatus, discharging a gas stream from the gas-liquid phase separation apparatus as synthesis gas product stream, discharging an ammonia-containing liquid condensate stream from the phase separation apparatus; and
(i) at least partially recycling the ammonia-containing liquid condensate stream to the quench chamber.

The process for producing the synthesis gas product stream containing hydrogen and carbon oxides from the fluid or fluidizable carbon-containing feed stream according to the present invention is of advantage in that the process increases the pH value of soot slurry discharged after the production of quenched crude synthesis gas stream from the partial oxidation reactor in a gasification process in order to protect the partial oxidation reactor material from corrosion. The process includes recycling formed ammonia present in the cold process condensate recovered downstream of the scrubbing stage in the gas cooling section to the quench chamber, thus the ammonia concentration in the raw synthesis gas received from the reaction chamber of the partial oxidation reactor is increased resulting in a higher ammonia concentration in the carbon-containing warm aqueous quenching agent stream and soot slurry discharged after the production of quenched crude synthesis gas stream from the partial oxidation reactor, which leads to a higher pH value in downstream systems, e.g. process condensate or soot slurry treatment.

According to a second aspect, the present invention provides a plant for producing a synthesis gas product stream containing hydrogen and carbon oxides by partial oxidation of a fluid or fluidizable carbon-containing feed stream with an oxygen-containing oxidant in a noncatalytic partial oxidation reactor, comprising the following assemblies and components:
(a) means for providing the feed stream in fluid or fluidized form, means for providing an oxidant stream, optionally means for providing a moderator stream comprising steam and/or carbon dioxide;
(b) a partial oxidation reactor comprising a reaction chamber having at least one inlet and an outlet, at least one burner arranged at the at least one inlet of the reaction chamber and a quench chamber arranged downstream of the outlet of the reaction chamber and in fluid connection therewith;
(c) means for introducing the feed stream, the oxidant stream and the optional moderator stream into the reaction chamber via the at least one burner;
(d) means for discharging a hot crude synthesis gas stream from the reaction chamber and means for introducing the hot crude synthesis gas stream into the quench chamber;
(e) means for discharging an abruptly cooled (quenched) crude synthesis gas stream from the quench chamber, at least one conditioning stage and/or purification stage, means for introducing the quenched crude synthesis gas stream into the at least one conditioning stage and/or purification stage, means for discharging a purified synthesis gas stream from the at least one conditioning stage and/or purification stage;
(f) at least one first cooling apparatus, means for introducing the purified synthesis gas stream into the at least one first cooling apparatus, means for discharging a cooled purified synthesis gas stream from the at least one cooling apparatus;
(g) a gas-liquid phase separation apparatus, means for introducing the cooled purified synthesis gas stream into the gas-liquid phase separation apparatus, means for discharging a gas stream from the phase separation apparatus as synthesis gas product stream, means for discharging an ammonia-containing liquid condensate stream from the phase separation apparatus; and
(h) means for at least partially recycling the ammonia-containing liquid condensate stream to the quench chamber.

The plant for producing the synthesis gas product stream containing hydrogen and carbon oxides from the fluid or fluidizable carbon-containing feed stream according to the present invention is of advantage in that the plant facilitates increasing the pH value of soot slurry discharged after the production of quenched crude synthesis gas stream from the partial oxidation reactor in a gasification process in order to protect the partial oxidation reactor material from corrosion. The plant includes recycling formed ammonia present in the cold process condensate to the quench chamber which is recovered downstream of the scrubbing stage in the gas cooling section, thus the ammonia concentration in the raw synthesis gas received from the reaction chamber of the partial oxidation reactor is increased resulting in a higher ammonia concentration in the carbon-containing warm aqueous quenching agent stream and soot slurry discharged after the production of quenched crude synthesis gas stream from the partial oxidation reactor leading to a higher pH value in downstream systems, e.g. process condensate or soot slurry treatment.

Embodiments of the present invention eliminate the aforementioned drawbacks in existing known approaches by lowering the potential corrosion rate in the quench chamber by recycling formed ammonia present in the cold process condensate to the quench chamber which is recovered downstream of the scrubbing stage in the gas cooling section.

Additional aspects, advantages, features and objects of the present invention are made apparent from the drawings and the detailed description of the illustrative embodiments construed in conjunction with the appended claims that follow. It will be appreciated that features of the present invention are susceptible to being combined in various combinations without departing from the scope of the present invention as defined by the appended claims.

### BRIEF DESCRIPTION OF THE DRAWINGS

The summary above, as well as the following detailed description of illustrative embodiments, is better understood when read in conjunction with the appended drawings. To illustrate the present invention, exemplary constructions of the invention are shown in the drawings. However, the present invention is not limited to specific methods and instrumentalities disclosed herein. Moreover, those in the art will understand that the drawings are not to scale. Wherever possible, the same elements have been indicated by identical numbers. Embodiments of the present invention will now be described, by way of example only, with reference to the following diagrams wherein:
**FIG. 1** is a block flow diagram of a plant for producing a synthesis gas product stream containing hydrogen and carbon oxides by partial oxidation of a fluid or fluidizable carbon-containing feed stream with an oxygen-containing oxidant in a noncatalytic partial oxidation reactor (POX reactor) according to an embodiment of the present invention;
**FIG. 2** illustrates an exemplary view of a prior art quench chamber with numerical examples of streams introduced into and discharged from the quench chamber based on a process simulation;
**FIG. 3** illustrates an exemplary view of a quench chamber with numerical examples of streams introduced into and discharged from the quench chamber of **FIG.1** based on a process simulation according to an embodiment of the present invention.

### DETAILED DESCRIPTION OF EMBODIMENTS

The following detailed description illustrates embodiments of the present invention and ways in which they can be implemented. Although some modes of carrying out the present invention have been disclosed, those skilled in the art would recognize that other embodiments for carrying out or practicing the present invention are also possible.

As used herein, several terms are defined below:
Fluid, fluidized, or fluidizable carbon-containing fuels or feeds are to be understood as meaning any gases, liquids, slurries, aerosols, pneumatically conveyed solid particles that contain carbon in elementary or chemically bound form, and that continuously flow under an applied shear stress, external force, or pressure difference. A non-exhaustive list of examples comprises hydrocarbonaceous gases like natural gas, hydrocarbonaceous liquids like naphtha, petroleum fractions, liquid refinery residues, solid carbonaceous particles like coal or coke powders or dusts.

An oxygen-containing oxidant is to be understood as any fluid containing oxygen, like pure oxygen at any purity level, air, or any other fluid that is capable of supplying oxygen to a carbon-containing reactant.

Partial oxidation conditions or gasification conditions are to be understood as meaning the reaction and process conditions known per se to a person skilled in the art, in particular of temperature, pressure and residence time, as discussed in detail in the relevant literature and under which at least partial conversion but preferably industrially relevant conversions of the reactants into synthesis gas products such as CO and hydrogen are effected.

Noncatalytic partial oxidation reactors are to be understood as meaning especially reaction apparatuses such as are described in the textbook "Gasification", C. Higman, M. van der Burgt, Gulf Professional Publishing, Elsevier (2003), Chapter 5.3 "Entrained-flow Gasifiers" and Chapter 5.4 "Oil Gasification and Partial Oxidation of Natural Gas".

These have in common that the reaction of the input streams with an oxygen-containing oxidant is effected in a reaction chamber having one or more burners which have arranged downstream of them a cooling zone often configured as a quench chamber. The reaction chamber consists substantially of a refractory lined or endowed empty space whose walls are in some embodiments cooled and which especially contains no solid catalyst to promote the partial oxidation reactions.

A means is to be understood as meaning something that enables or is helpful in the achievement of a goal. In particular, means for performing a particular process step are to be understood as meaning any physical articles that would be considered by a person skilled in the art in order to be able to perform this process step. For example, a person skilled in the art will consider means of introducing or discharging a material stream to include any transporting and conveying apparatuses, i.e. for example pipelines, pumps, compressors, valves, which seem necessary or sensible to said skilled person for performance of this process step on the basis of his knowledge of the art.

For the purposes of this description, the term "steam" is to be understood as being synonymous with water vapor unless the opposite is indicated in an individual case. By contrast, the term "water" refers to water in the liquid state of matter unless otherwise stated in an individual case.

Pressures, if any, are reported in absolute pressure units, bara for short, or in gauge pressure units, barg for short, unless otherwise stated in the particular individual context.

A fluid connection between two regions of the apparatus or plant according to the invention is to be understood as meaning any type of connection whatsoever which makes it possible for a fluid, for example, a gas stream, to flow from one to the other of the two regions, neglecting any interposed regions or components. In particular, a direct fluid connection is to be understood as meaning any type of connection whatsoever which makes it possible for a fluid, for example, a gas stream to flow directly from one to the other of the two regions, wherein no further regions or components are interposed with the exception of purely transportational operations and the means required therefor, for example pipelines, valves, pumps, compressors, reservoirs. One example would be a pipeline leading directly from one to the other of the two regions.

A synthesis gas (syngas) is a gas mixture comprising carbon oxides, for example carbon monoxide (CO), and hydrogen (H₂).

A pure, purified, or partially purified synthesis gas designates synonymously a synthesis gas resulting from a purification step, wherein the purification step serves to increase the concentration of desired synthesis gas constituents, for example carbon monoxide (CO) and/or hydrogen (H₂), relative to the crude synthesis gas directly obtained from the synthesis gas generation step, for example from the partial oxidation (POX) step. In a non-limiting example, the purification step may comprise a filtering step, gas washing or scrubbing step (absorption step), adsorption step, cryogenic separation step, or any combination of such steps. However, as it is well known in the art, the skilled practitioner will understand that any other purification step serving to increase the concentration of desired synthesis gas constituents may be comprised in the purification stage.

A conditioning step is to be understood to comprise any step that serves to change the physical state, especially relative to temperature and pressure, or the chemical composition of a synthesis gas stream. Changing the chemical composition of a synthesis gas stream may be realized by simple physical treatment, for example by condensing out water vapor contained in the synthesis gas stream, or by chemical reaction, for example by subjecting the synthesis gas stream to a CO shift or water gas shift reaction according to the following equation, if it is desired to maximize the hydrogen concentration at the cost of reducing the carbon monoxide concentration:

CO + H₂O = CO₂ + H₂

The reaction conditions to be employed for performing the CO shift reaction are well known from the prior art, and may easily be adapted by the skilled expert according to specific requirements based on routine experiments.

According to a first aspect, the present invention provides a process for producing a synthesis gas product stream containing hydrogen and carbon oxides by partial oxidation of a fluid or fluidizable carbon-containing feed stream with an oxygen-containing oxidant in a partial oxidation reactor, comprising the following steps:
(a) providing the feed stream in fluid or fluidized form, providing an oxidant stream, optionally providing a moderator stream comprising steam and/or carbon dioxide;
(b) providing a partial oxidation reactor comprising a reaction chamber having at least one inlet and an outlet, at least one burner arranged at the at least one inlet of the reaction chamber and a quench chamber arranged downstream of the outlet of the reaction chamber and in fluid connection therewith;
(c) introducing the feed stream, the oxidant stream and the optional moderator stream into the reaction chamber via the at least one burner;
(d) at least partially reacting the feed stream with the oxidant stream under partial oxidation conditions in the burner and/or in the reaction chamber arranged downstream of the burner to afford a hot crude synthesis gas stream;
(e) discharging the hot crude synthesis gas stream from the reaction chamber and introducing the hot crude synthesis gas stream into the quench chamber, abruptly cooling (quenching) the hot crude synthesis gas stream in the quench chamber by means of contacting and direct heat exchange of the hot crude synthesis gas stream with a cold aqueous quenching agent stream to form a quenched crude synthesis gas stream and a carbon-containing warm aqueous quenching agent stream;
(f) discharging the quenched crude synthesis gas stream from the quench chamber and introducing the quenched crude synthesis gas stream into at least one conditioning stage and/or purification stage, discharging a purified synthesis gas stream from the at least one conditioning stage and/or purification stage;
(g) introducing the purified synthesis gas stream into at least one first cooling apparatus, cooling the purified synthesis gas stream in the at least one first cooling apparatus in indirect heat exchange with a first coolant stream, discharging a cooled purified synthesis gas stream from the at least one cooling apparatus;
(h) introducing the cooled purified synthesis gas stream into a gas-liquid phase separation apparatus, discharging a gas stream from the gas-liquid phase separation apparatus as synthesis gas product stream, discharging an ammonia-containing liquid condensate stream from the phase separation apparatus; and
(i) at least partially recycling the ammonia-containing liquid condensate stream to the quench chamber.

The process for producing the synthesis gas product stream containing hydrogen and carbon oxides from the fluid or fluidizable carbon-containing feed stream according to the present invention is of advantage in that the process increases the pH value of soot slurry discharged after the production of quenched crude synthesis gas stream from the partial oxidation reactor in a gasification process in order to protect the partial oxidation reactor material from corrosion. The process includes recycling formed ammonia present in the cold process condensate recovered downstream of the scrubbing stage in a gas cooling section to the quench chamber, thus the ammonia concentration in the raw synthesis gas received from the reaction chamber of the partial oxidation reactor is increased resulting in a higher ammonia concentration in carbon-containing warm aqueous quenching agent stream and soot slurry discharged after the production of quenched crude synthesis gas stream from the partial oxidation reactor, which leads to a higher pH value in downstream systems, e.g. process condensate or soot slurry treatment.

The fluid or fluidizable carbon-containing feed stream may also contain nitrogen. During the gasification of the fluid or fluidizable carbon-containing feed stream, part of the nitrogen is converted to ammonia. In process configurations where a hot water phase, i.e. the carbon-containing warm aqueous quenching agent stream, is in contact with the ammonia-containing raw synthesis gas received from the reaction chamber of the partial oxidation reactor (e.g. quench chamber downstream of the partial oxidation reactor), the major part of the ammonia stays essentially in the gaseous phase. The ammonia is only removed at lower temperatures in a condensing water phase during cooling of the purified synthesis gas stream in the at least one cooling apparatus. The condensing water phase containing most of the formed ammonia is recycled to the hot water phase being in contact with the hot raw synthesis gas received from the reaction chamber of the partial oxidation reactor. Due to the increased partial pressure, more amount of ammonia stays in the condensing water phase and therefore increasing the pH value.

Optionally, the ammonia-containing liquid condensate stream is introduced into the quench chamber separately from the cold aqueous quenching agent stream or together with the cold aqueous quenching agent stream. Due to the high temperature in the quench chamber, most of the ammonia from the hot water phase, i.e. the carbon-containing warm aqueous quenching agent stream, is released again to the raw synthesis gas received from the reaction chamber of the partial oxidation reactor. Nevertheless, as a consequence of the higher partial pressure of ammonia in the raw synthesis gas, more ammonia stays also in the soot slurry discharged after the production of quenched crude synthesis gas stream from the partial oxidation reactor which consequently has a higher pH value. Thus, the higher amount of ammonia maintained lead also to higher pH values in downstream systems, e.g. process condensate or soot slurry treatment. By adjusting the ratio of bleed to returned condensate, the level of increase of the ammonia can be controlled.

Optionally, the at least one conditioning stage and/or purification stage is selected from the group comprising: (a) scrubbing stage for gas scrubbing using water as scrubbing agent without gas acceleration, (b) scrubbing stage for gas scrubbing using water as scrubbing agent with gas acceleration (Venturi scrubber), or (c) CO conversion stage (CO shift stage). Downstream of the scrubbing stage and upstream of a gas cleaning unit, the raw synthesis gas received from the partial oxidation reactor is cooled down. In one example, the gas cleaning unit serves to remove undesired gas constituents like H₂S and CO₂ and other gaseous contaminants. At lower temperatures, the water contained in the raw synthesis gas condenses and further due to the high solubility of ammonia at low temperature, ammonia from the raw synthesis gas is absorbed. The lower the temperature the more ammonia is removed.

Optionally, at least a portion of the wastewater streams obtained in purification stages (a) and (b) are recycled after optional cooling to the quench chamber as part of the cold aqueous quenching agent stream or form the cold aqueous quenching agent stream. By this embodiment, the undesired production of wastewater is minimized by reusing it advantageously in the process according to the invention.

Optionally, the ammonia-containing liquid condensate stream prior to recycling to the quench chamber is introduced into a second cooling apparatus and cooled in indirect heat exchange with a second coolant stream to obtain a cooled ammonia-containing liquid condensate stream which is at least in part recycled to the quench chamber. By this embodiment, the reuse of thermal energy is optimized in the process according to the invention.

Optionally, a first portion of the ammonia-containing liquid condensate stream is recycled to the quench chamber and a second portion of the ammonia-containing liquid condensate stream is passed to a water treatment stage. By this embodiment, the undesired production of wastewater is minimized by reusing it advantageously in the process according to the invention, while at the same time the accumulation of undesired constituents in the wastewater is avoided.

Optionally, the pH of the cold aqueous quenching agent stream together with the recycled portion of the ammonia-containing liquid condensate stream is at least 5.8, preferably at least 6.0, most preferably at least 6.2. Studies show that these pH values have advantageous effects with regard to protecting the partial oxidation reactor material from corrosion.

Optionally, the pH of the quenching agent stream obtained in step (e) and/or the pH of the water scrubbing agent is adjusted by recycling a defined portion of the ammonia-containing liquid condensate stream, with the remaining portion of the ammonia-containing liquid condensate stream being discharged from the process. By this embodiment, the use of additional chemicals for adjusting the pH is minimized or even avoided.

According to a second aspect, the present invention provides a plant for producing a synthesis gas product stream containing hydrogen and carbon oxides by partial oxidation of a fluid or fluidizable carbon-containing feed stream with an oxygen-containing oxidant in a noncatalytic partial oxidation reactor, comprising the following assemblies and components:
(a) means for providing the feed stream in fluid or fluidized form, means for providing an oxidant stream, optionally means for providing a moderator stream comprising steam and/or carbon dioxide;
(b) a partial oxidation reactor comprising a reaction chamber having at least one inlet and an outlet, at least one burner arranged at the at least one inlet of the reaction chamber and a quench chamber arranged downstream of the outlet of the reaction chamber and in fluid connection therewith;
(c) means for introducing the feed stream, the oxidant stream and the optional moderator stream into the reaction chamber via the at least one burner;
(d) means for discharging a hot crude synthesis gas stream from the reaction chamber and means for introducing the hot crude synthesis gas stream into the quench chamber;
(e) means for discharging an abruptly cooled (quenched) crude synthesis gas stream from the quench chamber, at least one conditioning stage and/or purification stage, means for introducing the quenched crude synthesis gas stream into the at least one conditioning stage and/or purification stage, means for discharging a purified synthesis gas stream from the at least one conditioning stage and/or purification stage;
(f) at least one first cooling apparatus, means for introducing the purified synthesis gas stream into the at least one first cooling apparatus, means for discharging a cooled purified synthesis gas stream from the at least one cooling apparatus;
(g) a gas-liquid phase separation apparatus, means for introducing the cooled purified synthesis gas stream into the gas-liquid phase separation apparatus, means for discharging a gas stream from the phase separation apparatus as synthesis gas product stream, means for discharging an ammonia-containing liquid condensate stream from the phase separation apparatus;
(h) means for at least partially recycling the ammonia-containing liquid condensate stream to the quench chamber.

Optionally, the plant includes a means which allow the ammonia-containing liquid condensate stream to be introduced into the quench chamber separately from the cold aqueous quenching agent stream or together with the cold aqueous quenching agent stream.

Optionally, the at least one conditioning stage and/or purification stage is selected from the group comprising: (a) scrubbing stage for gas scrubbing using water as scrubbing agent without gas acceleration, (b) scrubbing stage for gas scrubbing using water as scrubbing agent with gas acceleration (Venturi scrubber), or (c) CO conversion stage (CO shift stage).

Optionally, the plant includes a means which allow at least a portion of the wastewater streams obtained in purification stages (a) and (b) to be recycled after optional cooling to the quench chamber as part of the cold aqueous quenching agent stream or to form the cold aqueous quenching agent stream.

Optionally, the plant includes a second cooling apparatus, means for introducing at least a portion of the ammonia-containing liquid condensate stream into the second cooling apparatus, means to discharge a cooled ammonia-containing liquid condensate stream from the second cooling apparatus, and means to recycle at least a portion of the cooled ammonia-containing liquid condensate stream to the quench chamber.

Optionally, the plant includes a means which allow a first portion of the ammonia-containing liquid condensate stream to be recycled to the quench chamber and a second portion of the ammonia-containing liquid condensate stream to be passed to a water treatment stage.

The plant for producing the synthesis gas product stream containing hydrogen and carbon oxides from the fluid or fluidizable carbon-containing feed stream according to the present invention is of advantage in that the plant facilitates increasing the pH value of soot slurry discharged after the production of quenched crude synthesis gas stream from the partial oxidation reactor in a gasification process in order to protect the partial oxidation reactor material from corrosion. The plant includes recycling formed ammonia present in the cold process condensate to the quench chamber which is recovered downstream of the scrubbing stage in the gas cooling section, thus the ammonia concentration in the raw synthesis gas received from the reaction chamber of the partial oxidation reactor is increased resulting in a higher ammonia concentration in carbon-containing warm aqueous quenching agent stream and soot slurry discharged after the production of quenched crude synthesis gas stream from the partial oxidation reactor, which leads to a higher pH value in downstream systems, e.g. process condensate or soot slurry treatment.

Embodiments of the present invention substantially eliminate or at least partially address the aforementioned technical drawbacks in existing technologies by lowering the potential corrosion rate in the quench chamber by recycling formed ammonia present in the cold process condensate to the quench chamber which is recovered downstream of the scrubbing stage in the gas cooling section.

### DETAILED DESCRIPTION OF THE DRAWINGS

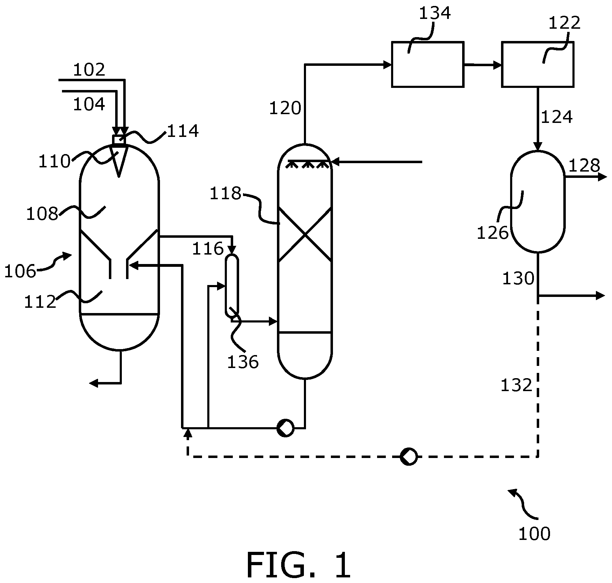

**FIG. 1** is a block diagram of a plant **100** for producing a synthesis gas product stream containing hydrogen and carbon oxides by partial oxidation of a fluid or fluidizable carbon-containing feed stream with an oxygen-containing oxidant in a noncatalytic partial oxidation reactor according to an embodiment of the present invention. The Plant **100** includes a feed stream providing means **102,** an oxidant stream providing means **104,** optionally a moderator stream providing means, a partial oxidation reactor **106,** a reaction chamber **108,** at least one burner **110,** and a quench chamber **112,** the feed stream, the oxidant stream and the optional moderator stream introducing means **114,** a hot crude synthesis gas stream discharging means, a hot crude synthesis gas stream introducing means, a quenched crude synthesis gas stream discharging means **116,** a quenched crude synthesis gas stream introducing means, at least one conditioning stage and/or purification stage **118,** a purified synthesis gas stream discharging means **120,** a purified synthesis gas stream introducing means, at least one first cooling apparatus **122,** a cooled purified synthesis gas stream discharging means **124,** a gas-liquid phase separation apparatus **126,** a cooled purified synthesis gas introducing means, a synthesis gas product stream discharging means **128,** an ammonia-containing liquid condensate stream discharging means **130,** an ammonia-containing liquid condensate stream recycling means **132,** a CO conversion stage **134,** and a Venturi-insert **136.** The synthesis gas product stream containing hydrogen and carbon oxides is produced by providing the fluid or fluidizable carbon-containing feed stream through the feed stream providing means **102,** providing an oxidant stream through the oxidant stream providing means **104,** and optionally providing a moderator stream comprising steam and/or carbon dioxide through the moderator stream providing means. The fluid or fluidizable carbon-containing feed stream, the oxidant stream and the optional moderator steam are introduced into the reaction chamber **108** of the partial oxidation reactor **106** via the at least one burner **110** through the feed stream, the oxidant stream and the optional moderator stream introducing means **114.** The partial oxidation reactor **106** includes the reaction chamber **108** having at least one inlet and an outlet. The at least one burner **110** is arranged at the at least one inlet of the reaction chamber **108** and the quench chamber **112** is arranged downstream of the outlet of the reaction chamber **108.** The quench chamber **112** is in fluid connection with the reaction chamber **108.** The feed stream is at least partially reacted with the oxidant stream under partial oxidation conditions in the at least one burner **110** and/or in the reaction chamber **108** arranged downstream of the at least one burner **110** to afford a hot crude synthesis gas stream. The hot crude synthesis gas stream is discharged from the reaction chamber **108** through the hot crude synthesis gas stream discharging means. The hot crude synthesis gas stream is introduced into the quench chamber **112** through the hot crude synthesis gas stream introducing means. The hot crude synthesis gas stream is abruptly cooled (quenched) in the quench chamber **112** by means of contact and direct heat exchange of the hot crude synthesis gas stream with a cold aqueous quenching agent stream to form a quenched crude synthesis gas stream and a carbon-containing warm aqueous quenching agent stream. The quenched crude synthesis gas stream is discharged from the quench chamber **112** through the quenched crude synthesis gas stream discharging means **116.** The discharged quenched crude synthesis gas stream is introduced into at least one conditioning stage and/or purification stage **118** through the quenched crude synthesis gas stream introducing means and a purified synthesis gas stream from the at least one conditioning stage and/or purification stage **118** is discharged through the purified synthesis gas stream discharging means **120.** The at least one conditioning stage and/or purification stage **118** may be a scrubbing stage for gas scrubbing using water as a scrubbing agent without gas acceleration. The at least one conditioning stage and/or purification stage **118** may include a Venturi scrubber for gas scrubbing using water as a scrubbing agent with gas acceleration. The Venturi scrubber includes the Venturi-insert **136.** The at least one conditioning stage and/or purification stage **118** may be a CO conversion stage (CO shift stage) **134** for additional generation of hydrogen in the synthesis gas. The purified synthesis gas stream is introduced into the at least one first cooling apparatus **122** through the purified synthesis gas stream introducing means and the purified synthesis gas stream is cooled in the at least one first cooling apparatus **122** in indirect heat exchange with a first coolant stream. A cooled purified synthesis gas stream is discharged from the at least one first cooling apparatus **122** through the cooled purified synthesis gas stream discharging means **124.** The cooled purified synthesis gas stream is introduced into a gas-liquid phase separation apparatus **126** through the cooled purified synthesis gas introducing means to discharge a gas stream from the gas-liquid phase separation apparatus **126** as synthesis gas product stream through the synthesis gas product stream discharging means **128** and an ammonia-containing liquid condensate stream through the ammonia-containing liquid condensate stream discharging means **130.** A first portion of the ammonia-containing liquid condensate stream is at least partially recycled to the quench chamber **112** through the ammonia-containing liquid condensate stream recycling means **132.** A second portion of the ammonia-containing liquid condensate stream is passed to a water treatment stage. A soot slurry produced after the production of quenched crude synthesis gas stream is discharged from the partial oxidation reactor **106.** Optionally, at least a portion of wastewater streams obtained in the scrubbing stage are recycled after optional cooling to the quench chamber **112** as part of the cold aqueous quenching agent stream or form the cold aqueous quenching agent stream. Optionally, water from the water treatment stage is introduced into the scrubbing stage.

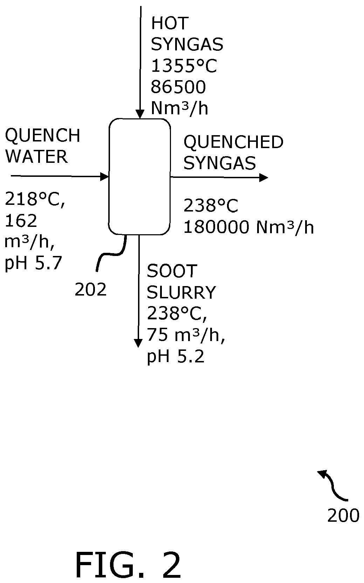

**FIG. 2** illustrates an exemplary view of a prior art quench chamber **202** with numerical examples of streams introduced into and discharged from the quench chamber **202** based on a process simulation. Quench water is introduced into the quench chamber **202** at a temperature of 218°C, at a flow rate of 162 cubic meter per hour, m³/h, and with a pH of 5.7. Hot synthesis gas is introduced into the quench chamber **202** at a temperature of 1355°C and at a flow rate of 86500 Nm³/h. Quenched synthesis gas is discharged from the quench chamber **202** at a temperature of 238°C and at a flow rate of 180000 Nm³/h. Soot slurry is discharged from the quench chamber **202** at a temperature of 238°C, at a flow rate of 75 m³/h, and with a pH of 5.2.

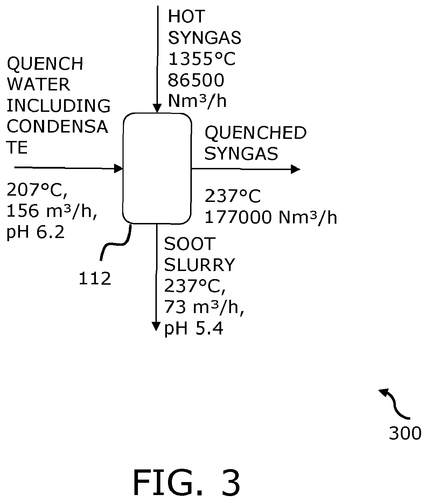

**FIG. 3** illustrates an exemplary view of the quench chamber **112** with numerical examples of streams introduced into and discharged from the quench chamber **112** of **FIG.1** based on a process simulation according to an embodiment of the present invention. Quench water is introduced into the quench chamber **112** including the ammonia-containing liquid condensate stream at a temperature of 207°C, at a flow rate of 156 m³/h and with a pH of 6.2. Hot synthesis gas is introduced into the quench chamber **112** at a temperature of 1355°C and at a flow rate of 86500 Nm³/h. Quenched synthesis gas is discharged from the quench chamber **112** at a temperature of 237°C and at a flow rate of 177000 Nm³/h. Soot slurry is discharged from the quench chamber **112** at a temperature of 237°C, at a flow rate of 73 m³/h and with a pH of 5.4. The pH of the quench water introduced in the quench chamber **112** including the ammonia-containing liquid condensate stream is 6.2 which is higher than the pH of the quench water introduced in the quench chamber **202** of FIG.2 which is 5.2. Low pH value of the water phase in the Quench chamber **202** of FIG.2 and the presence of formic acid cause a high corrosion rate of the carbon steel pressure shell. The soot slurry released from the quench chamber **112** includes a higher pH of 5.4 compared to the soot slurry discharged from the quench chamber **202** of FIG.2 which is 5.2. In order to mitigate the corrosion, the ammonia present in the cold process condensate recovered downstream of the scrubber in the gas cooling section is routed back to the quench chamber **112** to increase the pH value of the soot slurry produced in the partial oxidation process in order to protect the material from corrosion.

Modifications to embodiments of the present invention described in the foregoing are possible without departing from the scope of the present invention as defined by the accompanying claims. Expressions such as "including", "comprising", "incorporating", "have", "is" used to describe, and claim the present invention are intended to be construed in a non-exclusive manner, namely allowing for items, components or elements not explicitly described also to be present. Reference to the singular is also to be construed to relate to the plural.

### LIST OF REFERENCE NUMERALS

- 100: plant
- 102: feed stream providing means
- 104: oxidant stream providing means
- 106: partial oxidation reactor
- 108: reaction chamber
- 110: at least one burner
- 112: quench chamber
- 114: feed stream, oxidant stream and optional moderator stream introducing means
- 116: quenched crude synthesis gas stream discharging means
- 118: at least one conditioning stage and/or purification stage
- 120: purified synthesis gas stream discharging means
- 122: at least one first cooling apparatus
- 124: cooled purified synthesis gas stream discharging means
- 126: gas-liquid phase separation apparatus
- 128: synthesis gas product stream discharging means
- 130: ammonia-containing liquid condensate stream discharging means
- 132: ammonia-containing liquid condensate stream recycling means
- 134: CO conversion stage
- 136: Venturi-insert

## Claims

1. Process for producing a synthesis gas product stream containing hydrogen and carbon oxides by partial oxidation of a fluid or fluidizable carbon-containing feed stream with an oxygen-containing oxidant in a partial oxidation reactor (106), comprising the following steps:
(a) providing the feed stream in fluid or fluidized form, providing an oxidant stream, optionally providing a moderator stream comprising steam and/or carbon dioxide;
(b) providing a partial oxidation reactor (106) comprising a reaction chamber (108) having at least one inlet and an outlet, at least one burner (110) arranged at the at least one inlet of the reaction chamber (108) and a quench chamber (112) arranged downstream of the outlet of the reaction chamber (108) and in fluid connection therewith;
(c) introducing the feed stream, the oxidant stream and the optional moderator stream into the reaction chamber (108) via the at least one burner (110);
(d) at least partially reacting the feed stream with the oxidant stream under partial oxidation conditions in the burner (110) and/or in the reaction chamber (108) arranged downstream of the burner (110) to afford a hot crude synthesis gas stream;
(e) discharging the hot crude synthesis gas stream from the reaction chamber (108) and introducing the hot crude synthesis gas stream into the quench chamber (112), abruptly cooling (quenching) the hot crude synthesis gas stream in the quench chamber (112) by means of contacting and direct heat exchange of the hot crude synthesis gas stream with a cold aqueous quenching agent stream to form a quenched crude synthesis gas stream and a carbon-containing warm aqueous quenching agent stream;
(f) discharging the quenched crude synthesis gas stream from the quench chamber (112) and introducing the quenched crude synthesis gas stream into at least one conditioning stage and/or purification stage (118), discharging a purified synthesis gas stream from the at least one conditioning stage and/or purification stage (118);
(g) introducing the purified synthesis gas stream into at least one first cooling apparatus (122), cooling the purified synthesis gas stream in the at least one first cooling apparatus (122) in indirect heat exchange with a first coolant stream, discharging a cooled purified synthesis gas stream from the at least one cooling apparatus (122);
(h) introducing the cooled purified synthesis gas stream into a gas-liquid phase separation apparatus (126), discharging a gas stream from the gas-liquid phase separation apparatus (126) as synthesis gas product stream, discharging an ammonia-containing liquid condensate stream from the phase separation apparatus (126); and
(i) at least partially recycling the ammonia-containing liquid condensate stream to the quench chamber (112).

2. Process according to Claim 1, **characterized in that** the ammonia-containing liquid condensate stream is introduced into the quench chamber (112) separately from the cold aqueous quenching agent stream or together with the cold aqueous quenching agent stream.

3. Process according to Claims 1 or 2, **characterized in that** the at least one conditioning stage and/or purification stage (118) is selected from the group comprising:
(a) scrubbing stage for gas scrubbing using water as scrubbing agent without gas acceleration,
(b) scrubbing stage for gas scrubbing using water as scrubbing agent with gas acceleration (Venturi scrubber), or
(c) CO conversion stage (CO shift stage) (134).

4. Process according to Claim 3, **characterized in that** at least a portion of the wastewater streams obtained in purification stages (a) and (b) are recycled after optional cooling to the quench chamber (112) as part of the cold aqueous quenching agent stream or form the cold aqueous quenching agent stream.

5. Process according to any of the preceding claims, **characterized in that** the ammonia-containing liquid condensate stream prior to recycling to the quench chamber (112) is introduced into a second cooling apparatus and cooled in indirect heat exchange with a second coolant stream to obtain a cooled ammonia-containing liquid condensate stream which is at least in part recycled to the quench chamber (112).

6. Process according to any of the preceding claims, **characterized in that** a first portion of the ammonia-containing liquid condensate stream is recycled to the quench chamber (112) and a second portion of the ammonia-containing liquid condensate stream is passed to a water treatment stage.

7. Process according to any of the preceding claims, **characterized in that** the pH of the cold aqueous quenching agent stream together with the recycled portion of the ammonia-containing liquid condensate stream is at least 5.8, preferably at least 6.0, most preferably at least 6.2.

8. Process according to Claim 3, **characterized in that** the pH of the quenching agent stream obtained in step (e) and/or the pH of the water scrubbing agent is adjusted by recycling a defined portion of the ammonia-containing liquid condensate stream, with the remaining portion of the ammonia-containing liquid condensate stream being discharged from the process.

9. Plant (100) for producing a synthesis gas product stream containing hydrogen and carbon oxides by partial oxidation of a fluid or fluidizable carbon-containing feed stream with an oxygen-containing oxidant in a noncatalytic partial oxidation reactor (106), comprising the following assemblies and components:
(a) means (102) for providing the feed stream in fluid or fluidized form, means (104) for providing an oxidant stream, optionally means for providing a moderator stream comprising steam and/or carbon dioxide;
(b) a partial oxidation reactor (106) comprising a reaction chamber (108) having at least one inlet and an outlet, at least one burner (110) arranged at the at least one inlet of the reaction chamber (108) and a quench chamber (112) arranged downstream of the outlet of the reaction chamber (108) and in fluid connection therewith;
(c) means (114) for introducing the feed stream, the oxidant stream and the optional moderator stream into the reaction chamber (108) via the at least one burner (110);
(d) means for discharging a hot crude synthesis gas stream from the reaction chamber (108) and means for introducing the hot crude synthesis gas stream into the quench chamber (112);
(e) means (116) for discharging an abruptly cooled (quenched) crude synthesis gas stream from the quench chamber (112), at least one conditioning stage and/or purification stage (118), means for introducing the quenched crude synthesis gas stream into the at least one conditioning stage and/or purification stage (118), means (120) for discharging a purified synthesis gas stream from the at least one conditioning stage and/or purification stage (118);
(f) at least one first cooling apparatus (122), means for introducing the purified synthesis gas stream into the at least one first cooling apparatus (122), means (124) for discharging a cooled purified synthesis gas stream from the at least one cooling apparatus (122);
(g) a gas-liquid phase separation apparatus (126), means for introducing the cooled purified synthesis gas stream into the gas-liquid phase separation apparatus (126), means (128) for discharging a gas stream from the phase separation apparatus (126) as synthesis gas product stream, means (130) for discharging an ammonia-containing liquid condensate stream from the phase separation apparatus (126); and
(h) means (132) for at least partially recycling the ammonia-containing liquid condensate stream to the quench chamber (112).

10. Plant (100) according to Claim 9, **characterized in that** it further comprises means which allow the ammonia-containing liquid condensate stream to be introduced into the quench chamber (112) separately from the cold aqueous quenching agent stream or together with the cold aqueous quenching agent stream.

11. Plant (100) according to Claim 9 or 10, **characterized in that** the at least one conditioning stage and/or purification stage (118) is selected from the group comprising:
(a) scrubbing stage for gas scrubbing using water as scrubbing agent without gas acceleration,
(b) scrubbing stage for gas scrubbing using water as scrubbing agent with gas acceleration (Venturi scrubber), or
(c) CO conversion stage (CO shift stage) (134).

12. Plant (100) according to Claim 11, **characterized in that** it further comprises means which allow at least a portion of the wastewater streams obtained in purification stages (a) and (b) to be recycled after optional cooling to the quench chamber (112) as part of the cold aqueous quenching agent stream or to form the cold aqueous quenching agent stream.

13. Plant (100) according to any of the preceding plant claims, **characterized in that** it further comprises a second cooling apparatus, means for introducing at least a portion of the ammonia-containing liquid condensate stream into the second cooling apparatus, means to discharge a cooled ammonia-containing liquid condensate stream from the second cooling apparatus, and means to recycle at least a portion of the cooled ammonia-containing liquid condensate stream to the quench chamber (112).

14. Plant (100) according to any of the preceding claims, **characterized in that** it further comprises means which allow a first portion of the ammonia-containing liquid condensate stream to be recycled to the quench chamber (112) and a second portion of the ammonia-containing liquid condensate stream to be passed to a water treatment stage.
